# EUROPEAN PATENT APPLICATION

(11) **EP 4 797 595 A2**
(43) Date of publication of application: **26.08.2026**
(21) Application number: 26183985.6
(22) Date of filing: 16.10.2020
(51) Int. Cl.: H04L 1/1867

(54) **TECHNIQUES FOR MANAGING AN UPLINK CONTROL CHANNEL OVERLAPPED IN TIME DOMAIN**

(62) Document number(s) of the earlier application(s) in accordance with Art. 76 EPC: 20957191.8 / 4 205 479
(71) Applicant: ZTE Corporation, Shenzhen, Guangdong 518057 (CN)
(72) Inventor: GOU, Wei, Shenzhen, 518057 (CN); HAO, Peng, Shenzhen, 518057 (CN); HAN, Xianghui, Shenzhen, 518057 (CN); ZHANG, Junfeng, Shenzhen, 518057 (CN); LIU, Xing, Shenzhen, 518057 (CN)
(74) Representative: Vossius & Partner Patentanwälte Rechtsanwälte mbB

(57) **Abstract**

Techniques are described for multiplexing non-acknowledgement (NACK) only physical uplink control channel (PUCCH) transmission that overlaps in time domain with another uplink control channel transmission. An example wireless communication method includes performing a first determination, by a communication node, whether a scheduling request (SR) transmission needs to be performed in a control channel; performing a second determination, by the communication node and in response to determining that the SR needs to be transmitted in the control channel, that a first resource for a non-acknowledgement (NACK) only transmission in the control channel overlaps in time domain with a second resource for the SR transmission; and transmitting, in response to the second determination, a sequence in the second resource in the control channel, where the sequence indicates the SR and a feedback message for the NACK only transmission.

## Description

### TECHNICAL FIELD

This disclosure is directed generally to digital wireless communications.

### BACKGROUND

Mobile telecommunication technologies are moving the world toward an increasingly connected and networked society. In comparison with the existing wireless networks, next generation systems and wireless communication techniques will need to support a much wider range of use-case characteristics and provide a more complex and sophisticated range of access requirements and flexibilities.

Long-Term Evolution (LTE) is a standard for wireless communication for mobile devices and data terminals developed by 3rd Generation Partnership Project (3GPP). LTE Advanced (LTE-A) is a wireless communication standard that enhances the LTE standard. The 5th generation of wireless system, known as 5G, advances the LTE and LTE-A wireless standards and is committed to supporting higher data-rates, large number of connections, ultra-low latency, high reliability and other emerging business needs.

### SUMMARY

Techniques are disclosed for multiplexing information for non-acknowledgement (NACK) only physical uplink control channel (PUCCH) that overlaps in time domain with another uplink control channel.

A first exemplary method for managing control channels overlapped in time domain, comprises performing a first determination, by a communication node, whether a scheduling request (SR) transmission needs to be performed in a control channel; performing a second determination, by the communication node and in response to determining that the SR needs to be transmitted in the control channel, that a first resource for a non-acknowledgement (NACK) only transmission in the control channel overlaps in time domain with a second resource for the SR transmission; and transmitting, in response to the second determination, a sequence in the second resource in the control channel, where the sequence indicates the SR and a feedback message for the NACK only transmission.

In some embodiments, the method further comprises transmitting, in response to determining that the SR does not need to be transmitted in the control channel, a NACK message in the first resource for the NACK only transmission in the control channel. In some embodiments, the sequence is determined based on a sequence cyclic shift value that is determined based on the feedback message for the NACK only transmission. In some embodiments, the feedback message is obtained by converting the NACK only transmission to one-bit. In some embodiments, the sequence is determined based on the SR transmission multiplexed with the NACK only transmission. In some embodiments, the feedback message includes either an acknowledgement (ACK) message or a NACK message. In some embodiments, the sequence for the ACK message is modulated ACK message, or the sequence for the NACK message is modulated NACK message.

A second exemplary method for managing control channels overlapped in time domain, comprises determining, by a communication node, that a first resource for a non-acknowledgement (NACK) only transmission in a control channel overlaps in time domain with a second resource for a hybrid automatic repeat request acknowledgement (HARQ-ACK) transmission; and transmitting, in response to the determining, a sequence in the second resource in the control channel, where the sequence indicates a first feedback message for the HARQ-ACK transmission and a second feedback message for the NACK only transmission.

In some embodiments, the HARQ-ACK transmission is a one-bit HARQ-ACK transmission based on a first transmission format. In some embodiments, the HARQ-ACK transmission is a two-bit HARQ-ACK transmission based on a second transmission format. In some embodiments, the sequence is determined based on a sequence cyclic shift value that is determined based on the first feedback message. In some embodiments, the sequence cyclic shift value is based on a first one-bit value associated with the HARQ-ACK transmission and a second one-bit value associated with the NACK only transmission. In some embodiments, the second one-bit value is obtained by converting the second feedback message for the NACK only transmission to the second one-bit value. In some embodiments, the first feedback message includes either an acknowledgement (ACK) message or a NACK message, and the second feedback message includes either the ACK message or the NACK message. In some embodiments, the sequence for the ACK message is modulated ACK message, or the sequence for the NACK message is modulated NACK message. **In** some embodiments, the control channel includes a physical uplink control channel (PUCCH).

A third exemplary method for managing control channels overlapped in time domain, comprises determining, by a communication node, that a first resource for a first non-acknowledgement (NACK) only transmission in a first control channel overlaps in time domain with a second resource for a second NACK only transmission in a second control channel; and transmitting, in response to the determining and in a third resource in a third control channel from at least two additional control channels, one or more bits that indicate a feedback message for both the first NACK only transmission and the second NACK only transmission, where the third control channel is selected based on a size of the one or more bits, and where the one or more bits are obtained by multiplexing a first value that indicate a first feedback message for the first NACK only transmission with a second value that indicates a second feedback message for the second NACK only transmission.

In some embodiments, the third resource of the third control channel is associated with one or two transmission bits. In some embodiments, the third resource of the third control channel is associated with more than two transmission bits. In some embodiments, the one or more bits are obtained by: converting each of the first value and the second value to one-bit value; and concatenating each of the one-bit value to obtain the one or more bits. In some embodiments, the method further comprises determining that a transmission using the third resource in the third control channel for the feedback message is not to be performed in response to the first feedback message and the second feedback message comprising an acknowledgement (ACK) message for both the first NACK only transmission and the second NACK only transmission.

In some embodiments, the transmitting the one or more bits that indicate the feedback message is performed in response to any one of the first feedback message and the second feedback message comprising a non-acknowledgment (NACK) message. In some embodiments, each non-acknowledgement (NACK) message in any one or more of the first feedback message and the second feedback message are converted to the first value and the second value, respectively, and each of the first value and the second value comprise one-bit. In some embodiments, the method further comprises transmitting, in the third control channel, an aperiodic-channel state information (A-CSI) report that is triggered by a downlink grant information that schedules a physical downlink shared channel or by a non-acknowledgement (NACK) of the physical downlink shared channel.

In some embodiments, the first control channel includes a first physical uplink control channel (PUCCH), the second control channel includes a second PUCCH, the third control channel includes a third PUCCH, and the at least two additional control channels includes at least two additional PUCCHs configured to transmit the one or more bits.

A fourth exemplary method for managing control channels overlapped in time domain, comprises receiving, by a network node and in a resource in a control channel, one or more bits that indicate a feedback message for both a first non-acknowledgement (NACK) only transmission and a second NACK only transmission, where the resource is based on a size of the one or more bits, and where the one or more bits are a result of a multiplexing operation between a first value that indicate a first feedback message for the first NACK only transmission and a second value that indicates a second feedback message for the second NACK only transmission. In some embodiments, the resource of the control channel is associated with one or two transmission bits. In some embodiments, the resource of the control channel is associated with more than two transmission bits. In some embodiments, the method further comprises receiving, in the control channel, an aperiodic-channel state information (A-CSI) report that is triggered by transmission of a downlink grant information that schedules a physical downlink shared channel or by a non-acknowledgement (NACK) of the physical downlink shared channel. In some embodiments, the control channel includes a physical uplink control channel (PUCCH).

A fifth exemplary method for managing control channels overlapped in time domain, comprises determining, by a communication node, that two first resources for two non-acknowledgement (NACK) only transmissions in two first control channels overlaps in time domain with two second resources for two unicast transmissions in two second control channels, where each of the first resources is associated with one NACK only transmission in one first control channel, and where each of the second resources is associated with one unicast transmission in one second control channel; obtaining a multiplexed unicast transmission by multiplexing the two unicast transmissions; and transmitting the multiplexed unicast transmission.

In some embodiments, the two first resources do not overlap in time domain. In some embodiments, the method further comprises obtaining, in response to the two first resources overlapping in time domain, a multiplexed NACK only transmission by multiplexing the two NACK only transmissions. In some embodiments, the two unicast transmissions include a unicast hybrid automatic repeat request acknowledgement (HARQ-ACK) transmission and a persistent or semi-persistent channel state information (CSI) transmission. In some embodiments, the two first control channels include two first physical uplink control channels (PUCCHs), and the two second control channels includes two second PUCCHs.

In yet another exemplary aspect, the above-described methods are embodied in the form of processor-executable code and stored in a non-transitory computer-readable storage medium. The code included in the computer readable storage medium when executed by a processor, causes the processor to implement the methods described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWING

FIGS. 1A-1B show in a slot or sub-slot two non-acknowledgement (NACK) only physical uplink control channels (PUCCHs) of multicast broadcast service (MBS) services overlap with unicast hybrid automatic repeat request acknowledgement (HARQ-ACK) PUCCH and persistent or semi-persistent channel state information (P/SP-CSI) PUCCH at the same time
FIGS. 2-4 show three example methods of managing control channels overlapped in time domain.
FIG. 5 shows an exemplary block diagram of a hardware platform that may be a part of a network node or a user equipment.
FIGS. 6-7 show two additional example methods of managing control channels overlapped in time domain.

### DETAILED DESCRIPTION

To reduce the overhead of hybrid automatic repeat request acknowledgement (HARQ-ACK) feedback and the number of HARQ-ACK physical uplink control channel (PUCCH) transmissions, some methods have been proposed, such as HARQ-ACK PUCCH transmission only for non-acknowledgement (NACK), or HARQ-ACK PUCCH transmission only for ACK. For broadcast services, there are also the above-mentioned methods to reduce overhead. For example, one multicast broadcast service (MBS) service is received by multiple UEs, and one PUCCH resource is configured for the MBS service for NACK only PUCCH transmission. When the UE does not receive the MBS service correctly, the UE transmits NACK only PUCCH in the PUCCH resource corresponding to the MBS service. When the UE receives the MBS service correctly, the UE does not need to perform HARQ-ACK PUCCH transmission.

In current technology, in order to reduce UE complexity and cost, for multiple overlapping PUCCHs in the time domain, the uplink control information (UCI) information in these PUCCHs is multiplexed into one PUCCH for transmission. Here, the PUCCH resource finally used is determined based on the primary rate interface (PRI) in the last downlink control information (DCI) specific to the UE. However, generally, because the broadcast service is scheduled based on a common DCI, the UE may not get a DCI specific to the UE, especially if the UE only has the broadcast service being received. Then, for multiple NACK only PUCCHs overlapping in the time domain, if the information for the NACK only PUCCHs are multiplexed, a suitable PUCCH resource will not be obtained. Thus, this patent application describes some multiplexing methods involving at least NACK only PUCCH in several embodiments as further shown below.

The example headings for the various sections below are used to facilitate the understanding of the disclosed subject matter and do not limit the scope of the claimed subject matter in any way. Accordingly, one or more features of one example section can be combined with one or more features of another example section. Furthermore, 5G terminology is used for the sake of clarity of explanation, but the techniques disclosed in the present document are not limited to 5G technology only, and may be used in wireless systems that implemented other protocols.

If NACK only PUCCH is defined as an existing PUCCH format, then the existing PUCCH format 0 or format 1 can be used by the UE. Regardless of whether the UE uses the PUCCH format 0 or format 1, the following methods described below are applicable. In some embodiments, the NACK only PUCCH is a PUCCH resource shared by multiple UEs for per MBS service or MBS receiving group included multiple UEs receiving the same MBS service.

### I. Embodiment 1

### Case1: One NACK only PUCCH and one scheduling request (SR) PUCCH format F0 (or format 0) overlap in the time domain

### Method 1:

In case 1, if the UE would transmit a positive SR (that is, the UE has an SR that needs to be transmitted), the UE converts NACK only PUCCH to 1 bit, and the value is 0 or 1, corresponding to NACK or ACK. Then the UE determines a sequence cyclic shift value according to Table 1, and transmits a sequence corresponding to the sequence cyclic shift value in the SR PUCCH resource. The sequences corresponding the various sequence cyclic shift values are pre-defined. Corresponding to case 1, if the base station detects a sequence from the SR PUCCH resource, and determines the NACK only PUCCH and SR information corresponding to the sequence corresponding to sequence cyclic shift value according to Table 1. The mapping relationship between a sequence cyclic shift value and the HARQ-ACK value for NACK only PUCCH is designed in Table 1. For example, if m_{cs} =3 is received from the SR PUCCH resource, it means a positive SR, and NACK is for NACK only PUCCH; if m_{cs} =9 is received from the SR PUCCH resource, it means a positive SR, and ACK is for NACK only PUCCH.

Note1: The technique of method 1 is used regardless of whether the NACK only PUCCH corresponds to ACK or NACK. According to the previous description, when a NACK only PUCCH corresponds to NACK, the NACK only PUCCH needs to be transmitted, or not. In other words, regardless of whether the UE wants to transmit NACK only PUCCH or not, as long as the NACK only PUCCH and SR PUCCH overlap in time domain, the above method 1 is executed

Note2: In the current technology, the SR PUCCH does not overlap with other PUCCHs in the time domain, and a positive SR corresponds to m_{cs} =0.

In case 1, if SR is negative (e.g., the UE does not have a SR that needs to be transmitted in the PUCCH) and UE would transmit a NACK only PUCCH (that is, corresponding to NACK), UE only transmits the NACK only PUCCH in the NACK only PUCCH resource.

In case 1, if SR is negative and UE would not transmit NACK only PUCCH (that is, corresponding to NACK), the UE does not need to do anything.

**Table 1 - Mapping of values for one HARQ-ACK information bit for NACK only PUCCH and positive SR for PUCCH format 0 to sequences**

| | | |
|---|---|---|
| HARQ-ACK Value for NACK only PUCCH | 0 | 1 |
| Sequence cyclic shift value | *m*_{CS} = 3 | *m*_{CS} = 9 |

### Method 2:

In case 1, if the UE would transmit a positive SR (that is, the UE has an SR that needs to be transmitted), the UE converts NACK only PUCCH to 1 bit, and the value is 0 or 1, corresponding to NACK or ACK. Then the UE determines a sequence cyclic shift value according to Table 2, and transmits a sequence corresponding to the sequence cyclic shift value in the SR PUCCH resource. The sequences corresponding the various sequence cyclic shift values are pre-defined. Corresponding to case 1, if the base station detects a sequence from the SR PUCCH resource, and determines the NACK only PUCCH and SR information corresponding to the sequence corresponding to sequence cyclic shift value according to Table 2. The mapping relationship between a sequence cyclic shift value and the HARQ-ACK value for NACK only PUCCH is designed in Table 2. For example, if m_{cs} =0 is received from the SR PUCCH resource, it means a positive SR, and NACK is for NACK only PUCCH; if m_{cs} =6 is received from the SR PUCCH resource, it means a positive SR, and ACK is for NACK only PUCCH.

Note1: The technique in method 2 is used regardless of whether the NACK only PUCCH corresponds to ACK or NACK. According to the previous description, when a NACK only PUCCH corresponds to NACK, the NACK only PUCCH needs to be transmitted, or not. In other words, regardless of whether the UE wants to transmit NACK only PUCCH or not, as long as the NACK only PUCCH and SR PUCCH overlap in time domain, the above method 2 is executed.

Using Table 2 can overcome the problem of NACK only PUCCH being missed by the UE. For example, if NACK only PUCCH is missed (that is, the UE does not know the existence of NACK only PUCCH, but the base station thinks that NACK only PUCCH exists), the UE determines that m_{cs} =0 according to the situation that only positive SR needs to be transmitted, and the sequence corresponding to m_{cs} =0 is transmitted in the SR PUCCH resource. In this way, the base station will detect that m_{cs} =0 from the SR PUCCH resource, and the base station still understands according to Table 2 that a NACK indication is received. At this time, the base station considers that SR is positive, and NACK is for NACK only PUCCH. In this way, the base station will still retransmit the data corresponding to NACK only PUCCH for the UE. This design idea can be summarized as: for a case where there is only positive SR (not overlapping with other channels), and for another case where positive SR and NACK only PUCCH overlap in the time domain and NACK is for NACK only PUCCH , the same m_{cs} value is used in SR PUCCH resource for the two cases.

Note2: In the current technology, the SR PUCCH does not overlap with other PUCCHs in the time domain, and a positive SR corresponds to m_{cs} =0.

In case 1, if SR is negative (e.g., the UE does not have a SR that needs to be transmitted in the PUCCH) and UE would transmit a NACK only PUCCH (that is, corresponding to NACK), UE only transmits the NACK only PUCCH in the NACK only PUCCH resource.

In case 1, if SR is negative and UE would not transmit NACK only PUCCH (that is, corresponding to NACK), the UE does not need to do anything.

**Table 2 - Mapping of values for one HARQ-ACK information bit for NACK only PUCCH and positive SR for PUCCH format 0 to sequences.**

| | | |
|---|---|---|
| HARQ-ACK Value for NACK only PUCCH | 0 | 1 |
| Sequence cyclic shift value | m_{cs}=0 | m_{cs}=6 |

### Method 3:

In case 1, if the UE would transmit a positive SR and NACK only PUCCH needs to be transmitted (that is, corresponding to NACK), the UE converts NACK only PUCCH to 1 bit with a value of 0, corresponding to NACK. Then the UE determines a sequence according to Table 3, and transmits the sequence in the SR PUCCH resource.

In case 1, if the UE would transmit a positive SR and NACK only PUCCH does not need to be transmitted (that is, corresponding to ACK), then the UE determines a sequence according to Table 4 or Table 4-a, and transmits the sequence in the SR PUCCH resource.

In case 1, if SR is negative (e.g., the UE does not have a SR that needs to be transmitted in the PUCCH) and UE would transmit a NACK only PUCCH (that is, corresponding to NACK), UE only transmits the NACK only PUCCH in the NACK only PUCCH resource.

In case 1, if SR is negative and UE would not transmit NACK only PUCCH (that is, corresponding to NACK), the UE does not need to do anything.

In method 3, if the base station detects a sequence from the SR PUCCH resource, and determines the NACK only PUCCH and SR information corresponding to a sequence corresponding to the sequence cyclic shift value according to Table 3 and Table 4 (or Table 4-a). For example, if the base station receives m_{cs} =0 from the SR PUCCH resource, check Table 4 (or Table 4-a) and Table 3, it means a positive SR, NACK is for NACK only PUCCH; if the base station receives m_{cs} =3 from the SR PUCCH resource, check Table 3 and Table 4 (or Table 4-a), it means positive SR, ACK is for NACK only PUCCH.

**Table 3 - Mapping of values for one NACK information bit for NACK only PUCCH and positive SR for PUCCH format 0 to sequence**

| | |
|---|---|
| NACK Value for NACK only PUCCH | 0 |
| Sequence cyclic shift value | *m*_{CS} = 3 |
| | (In some embodiments, the m_{cs} value for this method can be 3 or 6 or 9, and the m_{cs} value can be agreed in advance between the base station and the UE.) |

**Table 4 - Mapping of values for positive SR for PUCCH format 0 to sequence**

| | |
|---|---|
| SR for PUCCH format 0 | positive SR |
| Sequence cyclic shift value | m_{cs}=0 |

**Table 4-a Mapping of values for one ACK information bit for NACK only PUCCH and positive SR for PUCCH format 0 to sequence**

| | |
|---|---|
| ACK Value for NACK only PUCCH | 1 |
| Sequence cyclic shift value | m_{cs}=0 |

### Case2: One NACK only PUCCH and one SR PUCCH format F1 (or format 1) overlap in the time domain

The method 1, method 2 or method 3 in case1 can be reused for the Case2, except that the bit information that needs to be transmitted is modulated to a determined sequence, and then the modulated ACK/NACK information sequence is respectively transmitted according to method 1, method 2 or method 3.

The above-mentioned methods 1 to 3 can use SR PUCCH resources, which is beneficial to avoid the UE conflict problem compared to selecting a common NACK only PUCCH resource to transmit the multiplexed sequence. For example, for an MBS service, 4 UEs (denoted as UE1~UE4) are receiving, and they share the same NACK only PUCCH resource to transmit NACK. If UE1 has the same overlap problem as in case1 and case2, and if UE2~UE4 does not have such a problem, then if UE1 uses the NACK only PUCCH resource to transmit the multiplexed sequence of SR and NACK only PUCCH, it will conflict with the NACK only transmission of UE2~UE4 in terms of sequence. Therefore, UE1 selects the SR PUCCH resource to transmit the multiplexed sequence of SR and NACK only PUCCH, which has obvious benefits because the SR PUCCH resource belongs to UE1.

### II. Embodiment 2

### Method 4

Case3: One NACK only PUCCH and 1bit HARQ-ACK PUCCH format F0 overlap in the time domain

In case3, if the UE would transmit NACK only PUCCH (that is, corresponding to NACK), 1bit HARQ-ACK PUCCH needs to be transmitted, then the UE determines a sequence corresponding to the sequence cyclic shift value according to Table 5, and transmit the sequence in the 1bit HARQ-ACK PUCCH Resources.

If the UE is in case3, the base station combines Table 5 and Table 6, and if m_{cs} =3 is received from the 1bit HARQ-ACK PUCCH resource, it means that NACK is for NACK only PUCCH, and NACK is for 1bit HARQ-ACK PUCCH F0;

If the base station receives m_{cs} =9 from the 1bit HARQ-ACK PUCCH resource, it means that NACK is for NACK only PUCCH, and ACK is for 1bit HARQ-ACK PUCCH F0;

If the base station receives m_{cs} =0 from the 1bit HARQ-ACK PUCCH resource, it means that ACK is for NACK only PUCCH, and NACK is for 1bit HARQ-ACK PUCCH F0;

If the base station receives m_{cs} =6 from the 1bit HARQ-ACK PUCCH resource, it means that ACK is for NACK only PUCCH, and ACK is for 1bit HARQ-ACK PUCCH F0.

In case3, if NACK only PUCCH does not need to be transmitted (corresponding to ACK) and 1bit HARQ-ACK PUCCH needs to be transmitted, then determine a sequence corresponding to the sequence cyclic shift value according to Table 6 and transmit the sequence in the 1bit HARQ-ACK PUCCH resource.

**Table 5 - Mapping of values for one HARQ-ACK information bit for HARQ-ACK PUCCH format 0 and one NACK information for NACK only PUCCH to sequences**

| | | |
|---|---|---|
| HARQ-ACK Value for HARQ-ACK PUCCH | 0 | 1 |
| Sequence cyclic shift value | *m*_{CS} = 3 | *m*_{CS} = 9 |

**Table 6 - Mapping of values for one HARQ-ACK information bit for HARQ-ACK PUCCH format 0 to sequences**

| | | |
|---|---|---|
| HARQ-ACK Value for HARQ-ACK PUCCH | 0 | 1 |
| Sequence cyclic shift value | *m*_{CS} = 0 | *m*_{CS} = 6 |

### Method 5

In case3, if one NACK only PUCCH and 1bit HARQ-ACK PUCCH format F0 overlap in the time domain, NACK only PUCCH is converted to 1bit, and the value is 0 or 1 according to the actual decoding result. Then combine the converted bit information and 1bit HARQ-ACK PUCCH format 0 as 2bit, and determine a sequence corresponding to the sequence cyclic shift value according to Table 7, and then transmit the sequence in the resource of 1bit HARQ-ACK PUCCH format 0. The order of combination for the 2bit can be 1bit HARQ-ACK PUCCH before NACK only PUCCH, and vice versa.

If the UE is in case3, the base station combines Table 7, if it receives m_{cs} =0 from the 1bit HARQ-ACK PUCCH resource, it means that NACK is for NACK only PUCCH, and NACK is for 1bit HARQ-ACK PUCCH F0;

If the base station receives m_{cs} =3 from the 1bit HARQ-ACK PUCCH resource, it means that ACK is for NACK only PUCCH, and NACK is for 1bit HARQ-ACK PUCCH F0;

If the base station receives m_{cs} =6 from the 1bit HARQ-ACK PUCCH resource, it means that ACK is for NACK only PUCCH, and ACK is for 1bit HARQ-ACK PUCCH F0;

If the base station receives m_{cs} =9 from the 1bit HARQ-ACK PUCCH resource, it means that NACK is for NACK only PUCCH, and ACK is for 1bit HARQ-ACK PUCCH F0.

**Table 7 - Mapping of values for one HARQ-ACK information bits for PUCCH format 0 and NACK only PUCCH to sequences**

| | | | | |
|---|---|---|---|---|
| {1bit HARQ-ACK PUCCH F0, NACK only PUCCH} Value | {0, 0} | {0, 1} | {1, 1} | {1, 0} |
| Sequence cyclic shift value | *m*_{CS} = 0 | *m*_{CS} = 3 | *m*_{CS} = 6 | *m*_{CS} = 9 |

### Case4: A NACK only PUCCH and a 1bit HARQ-ACK PUCCH format F1 overlapped in the time domain

The method adopted in Case 4 is similar to that in Case 3, except that the bit information that needs to be transmitted is modulated to a determined sequence, and then the modulated sequence is sent. Methods 4 to 5 under Case 3 are used as case 4, and after the sequence corresponding to m_{cs} is determined, the bit information to be transmitted is modulated onto the sequence, and then the modulated sequence is transmitted.

### Case5: A NACK only PUCCH and a 2bit HARQ-ACK PUCCH format F0 overlapped in the time domain

### Method 6

In case5, if the UE would transmit NACK only PUCCH (corresponding to NACK), 2bit HARQ-ACK PUCCH F0 is transmitted, the UE determines a sequence corresponding to the sequence cyclic shift value according to Table 8 (or Table 9), and transmits the sequence in the 2bit HARQ-ACK PUCCH resources. If the UE does not want to transmit NACK only PUCCH (corresponding to ACK), 2bit HARQ-ACK PUCCH F0 is transmitted, and the UE determines a sequence corresponding to the sequence cyclic shift value according to Table 9 (or Table 8) and transmits the sequence in the 2bit HARQ-ACK PUCCH resource.

**Table 8 - Mapping of values for two HARQ-ACK information bits for PUCCH format 0 and NACK only PUCCH to sequences**

| | | | | |
|---|---|---|---|---|
| 2bit HARQ-ACK PUCCH F0 Value | {0, 0} | {0, 1} | {1, 1} | {1, 0} |
| Sequence cyclic shift value | m_{cs} =1 | m_{cs} =4 | m_{cs} =7 | m_{cs} =10 |

**Table 9 - Mapping of values for two HARQ-ACK information bits for PUCCH format 0 and ACK only PUCCH to sequences**

| | | | | |
|---|---|---|---|---|
| 2bit HARQ-ACK PUCCH F0 Value | {0, 0} | {0, 1} | {1, 1} | {1, 0} |
| Sequence cyclic shift value | *m*_{CS} = 0 | *m*_{CS} = 3 | *m*_{CS} = 6 | *m*_{CS} = 9 |

### Case6: A NACK only PUCCH and a 2bit HARQ-ACK PUCCH format F1 overlapped in the time domain

The method used in Case 6 is similar to that in Case 5, except that the bit information that needs to be transmitted is modulated to a determined sequence, and then the modulated sequence is sent. Method 6 under Case 5 is adopted as Case 6, and after the sequence corresponding to m_{cs} is determined, the bit information to be transmitted is modulated onto the sequence, and then the modulated sequence is transmitted.

### III. Embodiment 3

### Case7: Only multiple NACK only PUCCHs overlap each other in the time domain

Method 7: The UE is configured with a new PUCCH resource (denoted as an additional PUCCH). If the UE has only multiple NACK only PUCCHs overlapping in the time domain, and these NACK only PUCCHs are multiplexed, then the multiplexed information from the NACK only PUCCHs is transmitted in the additional PUCCH resource. There may be at least two additional PUCCH resources (denoted as PUCCH1 and PUCCH2), the number of transmission bits corresponding to the additional PUCCH1 is 1 to 2 bits, and the number of transmission bits corresponding to the additional PUCCH2 is more than 2 bits.

Here, the above-mentioned NACK only PUCCH multiplexing refers to converting each NACK only PUCCH into 1 bit, then concatenating these 1 bits to obtain a final bit information, and then transmitting the final bit information in the additional PUCCH1 or PUCCH2 according to the size of the final bits information.

For multiple UEs, their additional PUCCH1 and PUCCH2 should be configured orthogonally.

An example if: if the UE only has multiple NACK only PUCCH resources overlapping in the time domain in one slot/sublot, and the UE would transmit at least one (or only one) NACK only PUCCH, then the UE converts each of the multiple NACK only PUCCHs to 1bit information, the value is 0 or 1 according to the actual decoding result. Then concatenate the converted 1bit information to obtain a final bits information, and transmit the final bits information in the additional PUCCH1 or PUCCH2 according to the size of the final bits information. The multiple NACK only PUCCHs are not transmitted. Or, if the UE only has multiple NACK only PUCCH resources overlapped in the time domain in a slot/subslot, and ACK is for each NACK only PUCCH, the UE does not transmit the multiple NACK only PUCCHs, and does not transmit the additional PUCCH1 or PUCCH2.

Another example if: if the UE only has multiple NACK only PUCCH resources overlapping in the time domain in a slot/subslot, the UE always converts each of the multiple NACK only PUCCHs to 1bit information, the value is 0 or 1 according to the actual decoding result. Then concatenate the converted 1bit information to obtain a final bits information, and transmit the final bits information in the additional PUCCH1 or PUCCH2 according to the size of the final bits information. The multiple NACK only PUCCHs are not transmitted. Here, regardless of whether NACK only PUCCH needs to be transmitted or not, the UE always converts each NACK only PUCCH to one bit information

In addition, the additional PUCCH1 or PUCCH2 here can also be used to transmit the aperiodic channel state information (A-CSI) report triggered by the downlink grant information or the NACK of a PDSCH.

For example, a downlink grant information schedules a PDSCH and triggers an A-CSI report, and the HARQ-ACK PUCCH resource corresponding to the PDSCH is indicated by the downlink grant information, but the downlink grant information cannot indicate another PUCCH resource for the A-CSI report at the same time. It is also because the time required for HARQ-ACK preparation and A-CSI preparation is different, and preparation of A-CSI requires more time. Therefore, on this basis, when the A-CSI report is triggered, the additional PUCCH is used for A-CSI report. In other words, if a downlink grant information schedules a PDSCH and also triggers an A-CSI report, then the A-CSI report is transmitted in the additional PUCCH1 or PUCCH2 by default. Or, if a NACK of a PDSCH triggers an A-CSI report, the A-CSI report is transmitted in the additional PUCCH1 or PUCCH2 by default.

### IV. Embodiment 4

Case 8: Including: One NACK only PUCCH and multiple unicast PUCCHs overlapping in the time domain; multiple NACK only PUCCHs and one unicast PUCCH overlapping in the time domain; multiple NACK only PUCCHs and multiple unicast PUCCHs overlapping in the time domain;

In case 8, two ideas can be considered:
Idea 1: First solve the overlap between the PUCCHs of the MBS service and the overlap between the unicast PUCCHs, and then solve the overlap between the PUCCH of the MBS service and the unicast PUCCH.

### One example

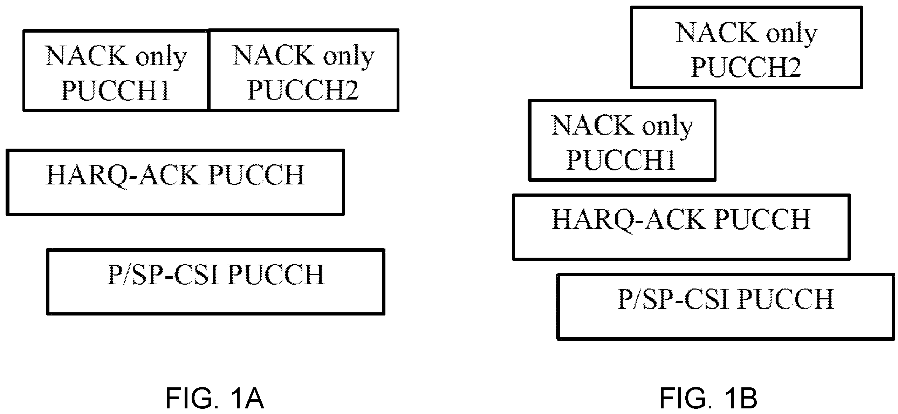

As shown in Figure 1A, in a slot/subslot, NACK only PUCCHs of two MBS services overlap with unicast HARQ-ACK PUCCH and P/SP-CSI PUCCH at the same time. The UE resolves the overlap between unicast HARQ-ACK PUCCH and P/SP-CSI PUCCH to obtain a multiplexed PUCCH3. The UE resolves the overlap between NACK only PUCCH1 and NACK only PUCCH2 to obtain a multiplexed PUCCH4 that is transmitted (in Figure 1A, for NACK only PUCCH1 and NACK only PUCCH2, actually no overlap, no need to resolve). Then UE resolves the overlap between the multiplexed PUCCH3 and the 2 NACK only PUCCH (if PUCCH3 overlaps with NACK only PUCCH1 and/or PUCCH2 in the time domain).

As shown in Figure 1B, in a slot/subslot, the two NACK only PUCCHs of the MBS service overlap, and they overlap with the unicast HARQ-ACK PUCCH and P/SP-CSI PUCCH at the same time. The UE resolves the overlap between unicast HARQ-ACK PUCCH and P/SP-CSI PUCCH to obtain a multiplexed PUCCH3. The UE resolves the overlap between 2 NACK only PUCCHs of MBS service to obtain a multiplexed PUCCH4(PUCCH4 is additional PUCCH mentioned in case 7). Then UE resolves the overlap between the multiplexed PUCCH3 and multiplexed PUCCH4 (if any).

Idea 2: Firstly solve the overlap between PUCCHs of the same UCI type, and then solve the overlap between PUCCHs of different UCI types.

As shown in Figures 1A and 1B, in a slot/subslot, two NACK only PUCCHs of MBS services overlap with unicast HARQ-ACK PUCCH and P/SP-CSI PUCCH at the same time. The UE solves the overlap between HARQ-ACK PUCCH, for example, the overlap between unicast HARQ-ACK PUCCH and 2 NACK only PUCCHs to obtain a multiplexed PUCCHS, and then resolves the multiplexed PUCCH5 and P/SP-PUCCH Overlap (if any) using the techniques described in this patent document.

UCI types include HARQ-ACK, SR, CSI. NACK only PUCCH is also counted as HARQ-ACK type.

In case 1~8, if NACK only PUCCH is replaced with ACK only PUCCH, all the above methods will also be applicable. Some adaptive modifications are necessary, for example, "NACK only PUCCH corresponds to NACK" is replaced with "ACK only PUCCH corresponds to ACK".

### V. Embodiment 5

In the current technology, the random access procedure includes four steps: 1. The UE sends the PRACH sequence (Random access preamble) to the gNodeB (also called msg0). 2. The gNodeB sends the RAR UL grant (Random access response) to schedule a PUSCH. 3. The UE sends the PUSCH scheduled by the RAR UL grant. 4. The gNodeB sends a PDSCH with UE contention resolution identity (also called msg4). The UE needs to feed back the HARQ-ACK PUCCH corresponding to the msg4 (that is, it needs to feed back the ACK after receiving the PDSCH correctly). Considering that uplink coverage is enhanced, the PUCCH transmission should use the repeated mechanism. However, to achieve this purpose, how to make the UE know that the number of PUCCH repetitions is a problem that needs to be solved.

In the current technology, there are two steps based on Random access procedure. Step 1: The UE sends the PRACH sequence to gNodeB (msgA), and step 2: The gNodeB sends Random access response (msgB) to the UE. The msgB is required to feed back the corresponding HARQ-ACK PUCCH to the gNodeB. The msgB is also confronted with similar problems mentioned above.

Some solutions for 4-step Random access procedure are as follows:
Method 1: In Random access procedure, the number of HARQ-ACK PUCCH repetition corresponding to msg4 is the same as the number of msg3 repetition.

For example, gNodeB and UE have agreed that the number of PUCCH repetition corresponding to msg4 is the same as the number of repeated msg3. In this way, if msg3 is required to be repeated and notified the number of msg3 repetition by gNodeB, the PUCCH corresponding to msg4 should also be repeated, and the number of the PUCCH repetition is the same as the number of msg3 repetition.

Method 2: In Random access procedure, the number of PUCCH repetition corresponding to msg4 is the same as the number of PRACH sequences (that is, msg0) repetition.

For example, gNodeB and UE agree that the number of PUCCH repetition corresponding to msg4 is the same as the number of msg0 repetition . In this way, if the msg0 is transmitted repeatedly by the UE, the PUCCH corresponding to the msg4 should also be repeated, and the number of PUCCH repetition should be the same as the number of the msg0 repetition.

Method 3: According to the agreement between gNodeB and UE, gNodeB indicates the number of PUCCH repetition corresponding to msg4 through the predefined bit field in the DCI scheduling msg4.

For example, gNodeB indicates the number of PUCCH repetition corresponding to msg4 by the predefined bit field in DCI scheduling msg4. The UE receives the DCI, and obtains the number of the PUCCH repetition, and repeatedly transmits the PUCCH. If the predefined bit field in the DCI is default, the PUCCH is not repeated or the number of PUCCH repetition is same as the number of the msg0/msg3 repetition.

Method 4: The number of PUCCH repetition corresponding to Msg4 is notified through MAC layer signaling, for example, in the PDSCH corresponding to msg4.

For example, a new MAC CE is introduced, and is transmitted to the UE through the PDSCH corresponding to the msg4, and indicates the number of PUCCH repetition corresponding to the msg4.

Or, for example, add new information indicating the number of msg4 repetition in the existing UE Contention Resolution Identity MAC CE. In this way, the UE Contention Resolution Identity MAC CE is transmitted to the UE through the PDSCH corresponding to the msg4, and the UE will know the number of PUCCH repetition corresponding to the msg4.

Method 5: PRACH sequences are divided into multiple groups. In each group, the PRACH sequence corresponds to a given number of PUCCH repetition corresponding to msg 4. That is, the number of PUCCH repetition is associated with different PRACH sequence groups. In this way, when the UE selects a PRACH sequence from a group to send, it will know the number of PUCCH repetition corresponding to msg4 in the Random access procedure.

Method 6: Separate RACH RO (RACH occasion) into multiple groups. The number of PUCCH repetition corresponding to msg 4 is associated with different RACH RO groups. In each group, RACH RO corresponds to a given number of PUCCH repetition. In this way, when the UE selects a RACH RO to send the PRACH sequence, it will knows the number of PUCCH repetition corresponding to the msg4 in the Random access procedure.

### Method 7:

In the current technology, the HARQ-ACK PUCCH corresponding to the msg4 has a total of 16 PUCCH resource sets. Each PUCCH resource set includes 16 PUCCH resources. The gNodeB configures a PUCCH resource set for a cell, and then indicates a PUCCH resource from the PUCCH set through signaling for UE. Thus, the UE can know a PUCCH resource for the HARQ-ACK PUCCH corresponding to the msg4.

To implement PUCCH repetition, a new attribute is added to the PUCCH resource in the PUCCH resource set, that is, the number of PUCCH repetition. In this way, each PUCCH resource in the PUCCH resource set can be set to the number of PUCCH repetition. If the gNodeB indicates a PUCCH resource from a PUCCH resource set through signaling, the UE will know the number of PUCCH repetition through the new attribute of the PUCCH resource.

For method 7, specific details for PUCCH resource before dedicated PUCCH resource configuration are given below.

Except for the last column in Table 10, Table 10 is an existing table for PUCCH resource set before dedicated PUCCH resource configuration. There are 16 rows in Table 10, and each row corresponds to a PUCCH resource set. One PUCCH resource set contains 16 PUCCH resources.

Configure a new PUCCH resource set for the UE before the dedicated PUCCH resource configuration:
For example, a list of attributes is added to Table 10, that is, "Support PUCCH repetition", which describes whether the PUCCH resources in the PUCCH resource set support PUCCH repetition.

A possible configuration has been configured in Table 10 for a PUCCH resource set that supports PUCCH repetition. It may be that the PUCCH resource set with the number of symbols greater than or equal to 4 in Table 10 is configured to support PUCCH repetition. It may also be that the PUCCH resource set with the number of symbols greater than or equal to 10 is configured to support PUCCH repetition.

**Table 10 - A new PUCCH resource set for the UE before the dedicated PUCCH resource configuration**

| Index | PUCCH format | First symbol | Number of symbols | PRB offset ${RB}_{BWP}^{offset}$ | Set of initial CS indexes | Support PUCCH repetition |
|---|---|---|---|---|---|---|
| 0 | 0 | 12 | 2 | 0 | {0, 3} | |
| 1 | 0 | 12 | 2 | 0 | {0, 4, 8} | |
| 2 | 0 | 12 | 2 | 3 | {0, 4, 8} | |
| 3 | 1 | 10 | 4 | 0 | {0, 6} | yes |
| 4 | 1 | 10 | 4 | 0 | {0, 3, 6, 9} | yes |
| 5 | 1 | 10 | 4 | 2 | {0, 3, 6, 9} | yes |
| 6 | 1 | 10 | 4 | 4 | {0, 3, 6, 9} | yes |
| 7 | 1 | 4 | 10 | 0 | {0, 6} | yes |
| 8 | 1 | 4 | 10 | 0 | {0, 3, 6, 9} | yes |
| 9 | 1 | 4 | 10 | 2 | {0, 3, 6, 9} | yes |
| 10 | 1 | 4 | 10 | 4 | {0, 3, 6, 9} | yes |
| 11 | 1 | 0 | 14 | 0 | {0, 6} | yes |
| 12 | 1 | 0 | 14 | 0 | {0, 3, 6, 9} | yes |
| 13 | 1 | 0 | 14 | 2 | {0, 3, 6, 9} | yes |
| 14 | 1 | 0 | 14 | 4 | {0, 3, 6, 9} | yes |
| 15 | 1 | 0 | 14 | $\left⌊{N}_{BWP}^{size}/4\right⌋$ | {0, 3, 6, 9} | yes |

Each row in Table 10 corresponds to 16 PUCCH resources, and the 16 PUCCH resources are shown in Tables 12 to 14 according to the "Set of initial CS indexes" column. In addition, an example of the configuration of the number of PUCCH repetitions is given in Tables 12 to 14, that is, the number of PUCCH repetitions corresponding to the same PRI value is configured the same.

Note: The "Number of repetition" column in Tables 12-14 is newly added according to Method 7. The remaining columns are all existing columns.

**Table 12 - PUCCH resources based on initial CS index set {0, 3, 6, 9}**

| *r*_{PUCCH} | PRI | CCE-based implicit bit | Hopping direction | UE specific PRB offset | Initial CS index | Number of repetition |
|---|---|---|---|---|---|---|
| 0 | 000 | 0 | 0 | 0 | 0 | 2 |
| 1 | | 1 | | | 3 | 2 |
| 2 | 001 | 0 | | | 6 | 4 |
| 3 | | 1 | | | 9 | 4 |
| 4 | 010 | 0 | | 1 | 0 | 8 |
| 5 | | 1 | | | 3 | 8 |
| 6 | 011 | 0 | | | 6 | 2 |
| 7 | | 1 | | | 9 | 2 |
| 8 | 100 | 0 | 1 | 0 | 0 | 4 |
| 9 | | 1 | | | 3 | 4 |
| 10 | 101 | 0 | | | 6 | 8 |
| 11 | | 1 | | | 9 | 8 |
| 12 | 110 | 0 | | 1 | 0 | 2 |
| 13 | | 1 | | | 3 | 2 |
| 14 | 111 | 0 | | | 6 | 4 |
| 15 | | 1 | | | 9 | 4 |

**Table 13 - PUCCH resources based on initial CS index set {0, 6}**

| *r*_{PUCCH} | PRI | CCE-based implicit bit | Hopping direction | UE specific PRB offset | Initial CS index | Number of repetition |
|---|---|---|---|---|---|---|
| 0 | 000 | 0 | 0 | 0 | 0 | 2 |
| 1 | | 1 | | | 6 | 2 |
| 2 | 001 | 0 | | | 0 | 4 |
| 3 | | 1 | | | 6 | 4 |
| 4 | 010 | 0 | | 1 | 0 | 8 |
| 5 | | 1 | | | 6 | 8 |
| 6 | 011 | 0 | | | 0 | 2 |
| 7 | | 1 | | | 6 | 2 |
| 8 | 100 | 0 | 1 | 0 | 0 | 4 |
| 9 | | 1 | | | 6 | 4 |
| 10 | 101 | 0 | | | 0 | 8 |
| 11 | | 1 | | | 6 | 8 |
| 12 | 110 | 0 | | 1 | 0 | 2 |
| 13 | | 1 | | | 6 | 2 |
| 14 | 111 | 0 | | | 0 | 4 |
| 15 | | 1 | | | 6 | 4 |

**Table 14 - PUCCH resources based on initial CS index set {0, 3}**

| *r*_{PUCCH} | PRI | CCE-based implicit bit | Hopping direction | UE specific PRB offset | Initial CS index | Number of repetition |
|---|---|---|---|---|---|---|
| 0 | 000 | 0 | 0 | 0 | 0 | 2 |
| 1 | | 1 | | | 3 | 2 |
| 2 | 001 | 0 | | | 0 | 4 |
| 3 | | 1 | | | 3 | 4 |
| 4 | 010 | 0 | | 1 | 0 | 8 |
| 5 | | 1 | | | 3 | 8 |
| 6 | 011 | 0 | | | 0 | 2 |
| 7 | | 1 | | | 3 | 2 |
| 8 | 100 | 0 | 1 | 0 | 0 | 4 |
| 9 | | 1 | | | 3 | 4 |
| 10 | 101 | 0 | | | 0 | 8 |
| 11 | | 1 | | | 3 | 8 |
| 12 | 110 | 0 | | 1 | 0 | 2 |
| 13 | | 1 | | | 3 | 2 |
| 14 | 111 | 0 | | | 0 | 4 |
| 15 | | 1 | | | 3 | 4 |

The process of UE determining PUCCH resources includes:
The first method: the UE first determines the random access level in the random access process, and then knows whether the PUCCH resource needs to be repeatedly transmitted according to the random access level.

For example, if the UE determines that it needs to support PUCCH repetition, the UE determines the PUCCH resource according to Tables 12 to 14, and determines the corresponding PUCCH repetition number (that is, the number of PUCCH repetitions in Tables 12 to 14 is valid for the UE. If the UE determines that it does not need to support PUCCH repetition, the number of PUCCH repetitions in Tables 12 to 14 is invalid for the UE).

If the UE determines that it needs to perform PUCCH repetition once during the random access process, then if the UE is not configured with dedicated PUCCH resources, the UE transmits the PUCCH according to the number of PUCCH repetitions determined during the random access process.

Using this mechanism, the existing PUCCH resource indication (PRI) in DCI can be reused, and there is no need to modify the indication of the common PUCCH resource set in SIB1.

### The second method:

A new PUCCH resource set indicator is added to SIB1 to describe a PUCCH resource set that supports PUCCH repeated transmission.

The UE determines its own random access level during the random access process and knows whether it needs to support PUCCH repeated transmission. If the UE needs to support PUCCH repetition, the UE determines a PUCCH resource set according to the newly added PUCCH resource indicator field in SIB1, which is used to indicate a PUCCH resource set that supports PUCCH repetition.

If the UE determines that it needs to perform PUCCH repetition once during the random access process, then if the UE is not configured with dedicated PUCCH resources, the UE transmits the PUCCH according to the number of PUCCH repetitions determined during the random access process.

If 16 PUCCH resources in a PUCCH resource set need to support PUCCH repetition, the method for configuring the number of PUCCH repetitions corresponding to the 16 PUCCH resources is as follows:
Add a column of attributes, namely "Number of repetition", in the PUCCH resource table. An example is shown in Tables 12-14. The configuration of the number of PUCCH repetitions can adopt at least one of the following:
Take Tables 12 - 14 as an example for description.

The first configuration method: PUCCH resources corresponding to the same PRI value are configured with the same number of repetitions. In this way, the inflexible number of PUCCH repetitions caused by the CCE index can be avoided. The CCE index is related to the CCE position actually occupied by the DCI. If there are more UEs, it is difficult to coordinate to the desired CCE position for one UE. It will be very flexible to directly determine the number of PUCCH resource repetitions by the PRI, regardless of the CCE index. In Tables 12 to 14, the number of PUCCH repetitions has been configured according to this configuration method.

The second configuration method: PUCCH resources corresponding to the same Hopping direction value are configured with the same number of repetitions.

PUCCH resources corresponding to the same UE specific PRB offset value are configured with the same number of repetitions.

The fourth configuration method: PUCCH resources corresponding to the same Initial CS index value are configured with the same number of repetitions.

The fifth configuration method: PUCCH resources corresponding to the same Initial CS index value are configured with different repetitive amounts. For example, in Table 12, the number of PUCCH resources corresponding to the 4 CS0s is configured to repeat 2, 4, 8, 16 respectively.

The sixth configuration method: for example, in Table 12, two PUCCH resources in the PUCCH resources corresponding to the same Initial CS index value are configured with the same repetition quantity, which is less than the repetition quantity of the remaining two PUCCHs. The number of repetitions of the remaining two PUCCHs is configured to be different.

Some solutions for 2-step Random access procedure are as follows:
Method 8(similar to Method 2): In Random access procedure, the number of PUCCH repetition corresponding to msgB is the same as the number of PRACH sequences (that is, msgA) repetition.

For example, gNodeB and UE agree that the number of PUCCH repetition corresponding to msgB is the same as the number of msgA repetition . In this way, if the msgA is transmitted repeatedly by the UE, the PUCCH corresponding to the msgB should also be repeated, and the number of PUCCH repetition should be the same as the number of the msgA repetition.

Method 9(similar to Method 3): According to the agreement between gNodeB and UE, gNodeB indicates the number of PUCCH repetition corresponding to msgB through the predefined bit field in the DCI scheduling msgB.

For example, gNodeB indicates the number of PUCCH repetition corresponding to msgB by the predefined bit field in DCI scheduling msgB. The UE receives the DCI, and obtains the number of the PUCCH repetition, and repeatedly transmits the PUCCH. If the predefined bit field in the DCI is default, the PUCCH is not repeated or the number of PUCCH repetition is same as the number of the msgA repetition.

### Method 10:

The number of PUCCH repetition corresponding to MsgB is notified in the PDSCH corresponding to msg B via MAC layer signaling.

For example, a new MAC CE is added to notify the UE, and is transmitted through the PDSCH corresponding to the msgB, and indicates the number of PUCCH repetition corresponding to the msgB.

Or, for example, adding new information indicating the number of PUCCH repetition corresponding to msgB to an existing SuccessRAR. In this way, the SuccessRAR is transmitted to the UE, and the UE will know the number of PUCCH repetition corresponding to the msgB. Or add new information indicating the number of PUCCH repetition corresponding to msgB in the existing MAC subheader for MSGB or in the existing MAC payload for MSGB.

Method 11(similar to Method 5): PRACH sequences are divided into multiple groups. In each group, the PRACH sequence corresponds to a given number of PUCCH repetition corresponding to msg B. That is, the number of PUCCH repetition is associated with different PRACH sequence groups. In this way, when the UE selects a PRACH sequence from a group to send, it will know the number of PUCCH repetition corresponding to msgB in the Random access procedure.

Method 12(similar to Method 6): Separate RACH RO (RACH occasion) into multiple groups. The number of PUCCH repetition corresponding to msgB is associated with different RACH RO groups. In each group, RACH RO corresponds to a given number of PUCCH repetition. In this way, when the UE selects a RACH RO to send the PRACH sequence, it will knows the number of PUCCH repetition corresponding to the msgB in the Random access procedure.

Method 13(similar to Method 7): In the current technology, the HARQ-ACK PUCCH corresponding to the msgB has a total of 16 PUCCH resource sets. Each PUCCH resource set includes 16 PUCCH resources. The gNodeB configures a PUCCH resource set for a cell, and then indicates a PUCCH resource from the PUCCH set through signaling for UE. Thus, the UE can know a PUCCH resource for the HARQ-ACK PUCCH corresponding to the msgB.

To implement PUCCH repetition, a new attribute is added to the PUCCH resource in the PUCCH resource set, that is, the number of PUCCH repetition. In this way, each PUCCH resource in the PUCCH resource set can be set to the number of PUCCH repetition. If the gNodeB indicates a PUCCH resource from a PUCCH resource set through signaling, the UE will know the number of PUCCH repetition through the new attribute of the PUCCH resource.

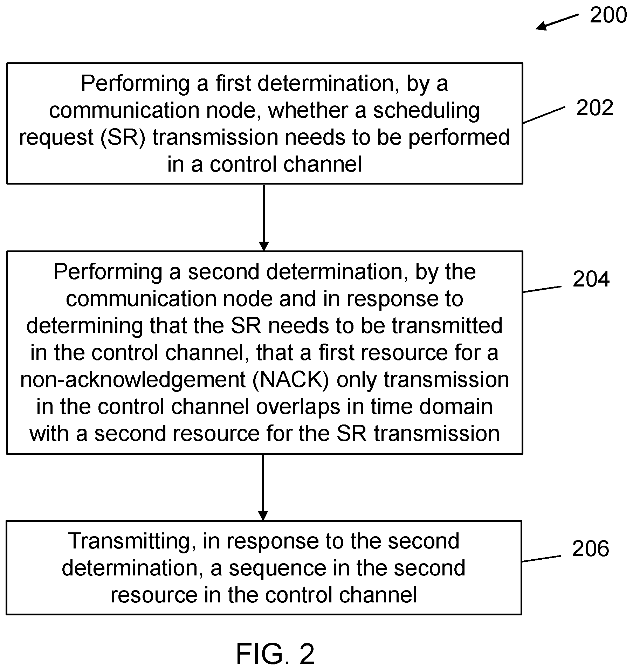

FIG. 2 shows a first exemplary method 200 for managing control channels overlapped in time domain. Operation 202 includes performing a first determination, by a communication node, whether a scheduling request (SR) transmission needs to be performed in a control channel. Operation 204 includes performing a second determination, by the communication node and in response to determining that the SR needs to be transmitted in the control channel, that a first resource for a non-acknowledgement (NACK) only transmission in the control channel overlaps in time domain with a second resource for the SR transmission. Operation 206 includes transmitting, in response to the second determination, a sequence in the second resource in the control channel, where the sequence indicates the SR and a feedback message for the NACK only transmission.

In some embodiments of method 200, the method further comprises transmitting, in response to determining that the SR does not need to be transmitted in the control channel, a NACK message in the first resource for the NACK only transmission in the control channel. In some embodiments of method 200, the sequence is determined based on a sequence cyclic shift value that is determined based on the feedback message for the NACK only transmission. In some embodiments of method 200, the feedback message is obtained by converting the NACK only transmission to one-bit. In some embodiments of method 200, the sequence is determined based on the SR transmission multiplexed with the NACK only transmission. In some embodiments of method 200, the feedback message includes either an acknowledgement (ACK) message or a NACK message. In some embodiments of method 200, the sequence for the ACK message is modulated ACK message, or the sequence for the NACK message is modulated NACK message.

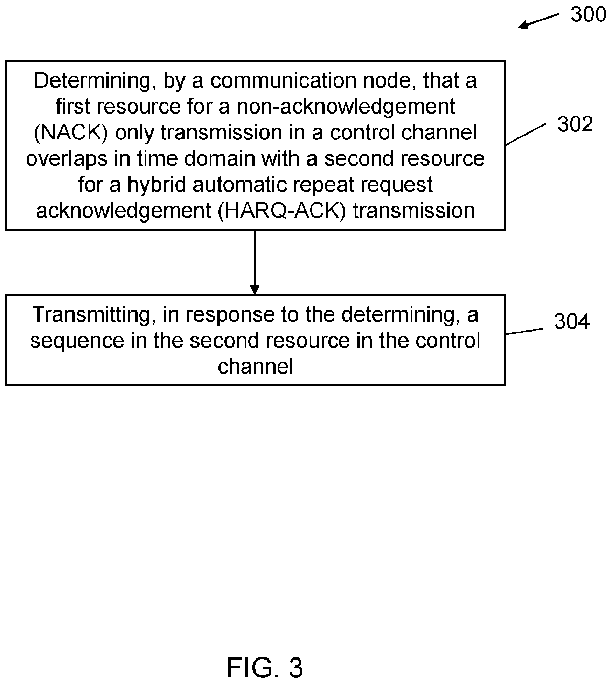

FIG. 3 shows a second exemplary method 300 for managing control channels overlapped in time domain. Operation 302 includes determining, by a communication node, that a first resource for a non-acknowledgement (NACK) only transmission in a control channel overlaps in time domain with a second resource for a hybrid automatic repeat request acknowledgement (HARQ-ACK) transmission. Operation 304 includes transmitting, in response to the determining, a sequence in the second resource in the control channel, where the sequence indicates a first feedback message for the HARQ-ACK transmission and a second feedback message for the NACK only transmission.

In some embodiments for method 300, the HARQ-ACK transmission is a one-bit HARQ-ACK transmission based on a first transmission format. In some embodiments for method 300, the HARQ-ACK transmission is a two-bit HARQ-ACK transmission based on a second transmission format. In some embodiments for method 300, the sequence is determined based on a sequence cyclic shift value that is determined based on the first feedback message. In some embodiments for method 300, the sequence cyclic shift value is based on a first one-bit value associated with the HARQ-ACK transmission and a second one-bit value associated with the NACK only transmission. In some embodiments for method 300, the second one-bit value is obtained by converting the second feedback message for the NACK only transmission to the second one-bit value. In some embodiments for method 300, the first feedback message includes either an acknowledgement (ACK) message or a NACK message, and the second feedback message includes either the ACK message or the NACK message. In some embodiments for method 300, the sequence for the ACK message is modulated ACK message, or the sequence for the NACK message is modulated NACK message. In some embodiments for methods 200 and 300, the control channel includes a physical uplink control channel (PUCCH).

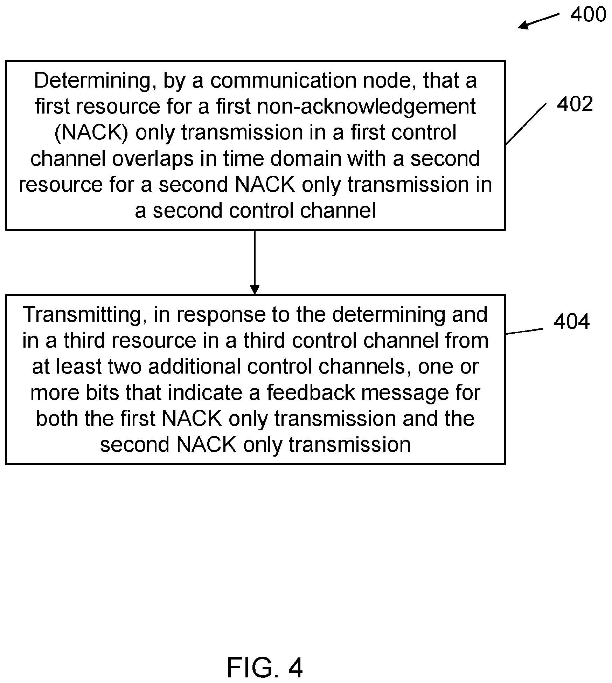

FIG. 4 shows a third exemplary method 400 for managing control channels overlapped in time domain. Operation 402 includes determining, by a communication node, that a first resource for a first non-acknowledgement (NACK) only transmission in a first control channel overlaps in time domain with a second resource for a second NACK only transmission in a second control channel. Operation 404 includes transmitting, in response to the determining and in a third resource in a third control channel from at least two additional control channels, one or more bits that indicate a feedback message for both the first NACK only transmission and the second NACK only transmission, where the third control channel is selected based on a size of the one or more bits, and where the one or more bits are obtained by multiplexing a first value that indicate a first feedback message for the first NACK only transmission with a second value that indicates a second feedback message for the second NACK only transmission.

In some embodiments for method 400, the third resource of the third control channel is associated with one or two transmission bits. In some embodiments for method 400, the third resource of the third control channel is associated with more than two transmission bits. In some embodiments for method 400, the one or more bits are obtained by: converting each of the first value and the second value to one-bit value; and concatenating each of the one-bit value to obtain the one or more bits. In some embodiments for method 400, the method further comprises determining that a transmission using the third resource in the third control channel for the feedback message is not to be performed in response to the first feedback message and the second feedback message comprising an acknowledgement (ACK) message for both the first NACK only transmission and the second NACK only transmission.

In some embodiments for method 400, the transmitting the one or more bits that indicate the feedback message is performed in response to any one of the first feedback message and the second feedback message comprising a non-acknowledgment (NACK) message. In some embodiments for method 400, each non-acknowledgement (NACK) message in any one or more of the first feedback message and the second feedback message are converted to the first value and the second value, respectively, and each of the first value and the second value comprise one-bit. In some embodiments for method 400, the method further comprises transmitting, in the third control channel, an aperiodic-channel state information (A-CSI) report that is triggered by a downlink grant information that schedules a physical downlink shared channel or by a non-acknowledgement (NACK) of the physical downlink shared channel.

In some embodiments for method 400, the first control channel includes a first physical uplink control channel (PUCCH), the second control channel includes a second PUCCH, the third control channel includes a third PUCCH, and the at least two additional control channels includes at least two additional PUCCHs configured to transmit the one or more bits.

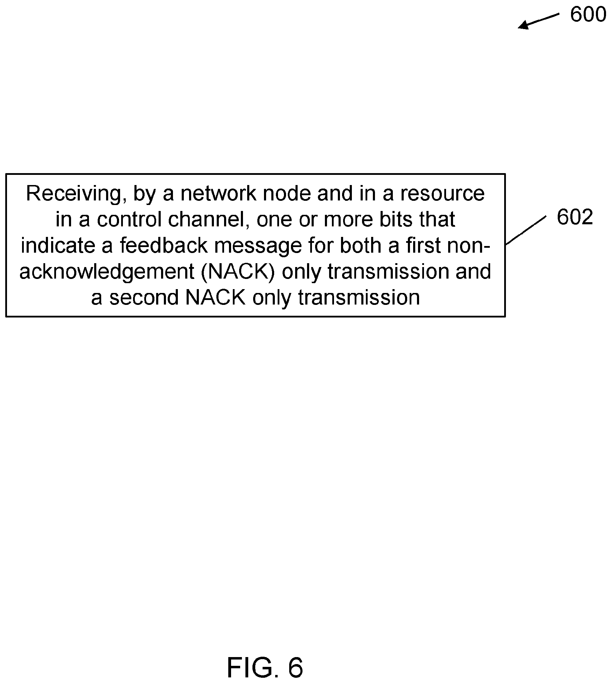

FIG. 6 shows a fourth exemplary method 600 for managing control channels overlapped in time domain. Operation 602 includes receiving, by a network node and in a resource in a control channel, one or more bits that indicate a feedback message for both a first non-acknowledgement (NACK) only transmission and a second NACK only transmission, where the resource is based on a size of the one or more bits, and where the one or more bits are a result of a multiplexing operation between a first value that indicate a first feedback message for the first NACK only transmission and a second value that indicates a second feedback message for the second NACK only transmission. In some embodiments for method 600, the resource of the control channel is associated with one or two transmission bits. In some embodiments for method 600, the resource of the control channel is associated with more than two transmission bits. In some embodiments for method 600, the method further comprises receiving, in the control channel, an aperiodic-channel state information (A-CSI) report that is triggered by transmission of a downlink grant information that schedules a physical downlink shared channel or by a non-acknowledgement (NACK) of the physical downlink shared channel. In some embodiments for method 600, the control channel includes a physical uplink control channel (PUCCH).

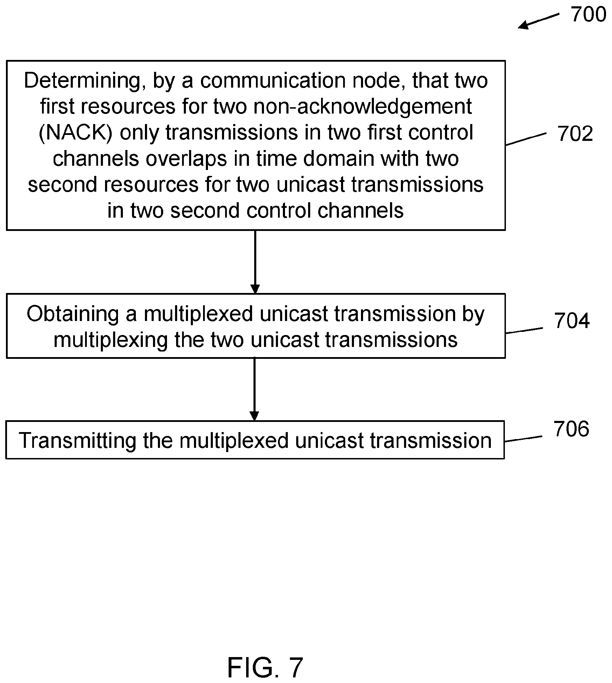

FIG. 7 shows a fifth exemplary method 700 for managing control channels overlapped in time domain. Operation 702 includes determining, by a communication node, that two first resources for two non-acknowledgement (NACK) only transmissions in two first control channels overlaps in time domain with two second resources for two unicast transmissions in two second control channels, where each of the first resources is associated with one NACK only transmission in one first control channel, and where each of the second resources is associated with one unicast transmission in one second control channel. Operation 704 includes obtaining a multiplexed unicast transmission by multiplexing the two unicast transmissions. Operation 706 includes transmitting the multiplexed unicast transmission.

In some embodiments for method 700, the two first resources do not overlap in time domain. In some embodiments for method 700, the method further comprises obtaining, in response to the two first resources overlapping in time domain, a multiplexed NACK only transmission by multiplexing the two NACK only transmissions. In some embodiments for method 700, the two unicast transmissions include a unicast hybrid automatic repeat request acknowledgement (HARQ-ACK) transmission and a persistent or semi-persistent channel state information (CSI) transmission. In some embodiments for method 700, the two first control channels include two first physical uplink control channels (PUCCHs), and the two second control channels includes two second PUCCHs.

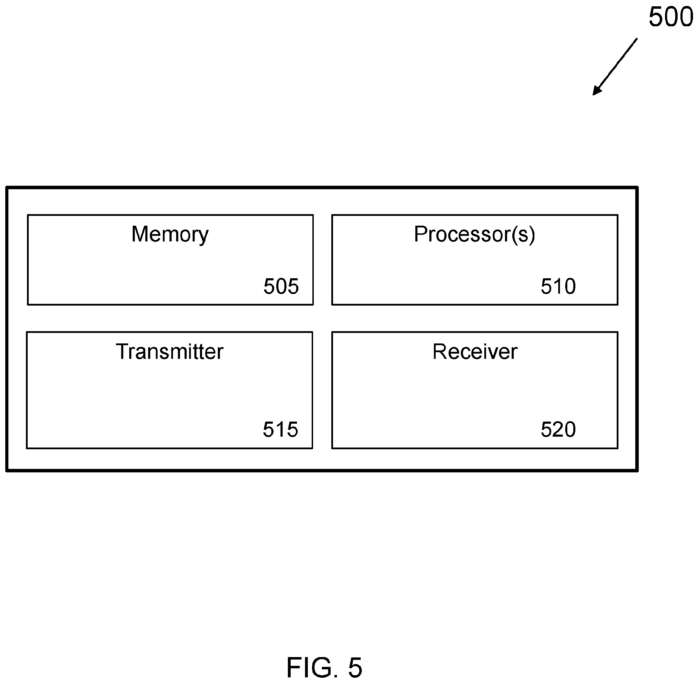

FIG. 5 shows an exemplary block diagram of a hardware platform 500 that may be a part of a network node or a user equipment. The hardware platform 500 includes at least one processor 510 and a memory 505 having instructions stored thereupon. The instructions upon execution by the processor 510 configure the hardware platform 500 to perform the operations described in FIGS. 1 to 4 and 6-7 and in the various embodiments described in this patent document. The transmitter 515 transmits or sends information or data to another node. For example, a network node transmitter can send a message to a user equipment. The receiver 520 receives information or data transmitted or sent by another node. For example, a user equipment can receive a message from a network node.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.
The following items refer to preferred embodiments:
1. A wireless communication method, comprising:
   performing a first determination, by a communication node, whether a scheduling request (SR) transmission needs to be performed in a control channel;
   performing a second determination, by the communication node and in response to determining that the SR needs to be transmitted in the control channel, that a first resource for a non-acknowledgement (NACK) only transmission in the control channel overlaps in time domain with a second resource for the SR transmission; and
   transmitting, in response to the second determination, a sequence in the second resource in the control channel,
   wherein the sequence indicates the SR and a feedback message for the NACK only transmission.
2. The method of item 1, further comprising:
   transmitting, in response to determining that the SR does not need to be transmitted in the control channel, a NACK message in the first resource for the NACK only transmission in the control channel.
3. The method of item 1, wherein the sequence is determined based on a sequence cyclic shift value that is determined based on the feedback message for the NACK only transmission.
4. The method of item 3, wherein the feedback message is obtained by converting the NACK only transmission to one-bit.
5. The method of item 3, wherein the sequence is determined based on the SR transmission multiplexed with the NACK only transmission.
6. The method of any of items 1 to 6, wherein the feedback message includes either an acknowledgement (ACK) message or a NACK message.
7. The method of item 6, wherein the sequence for the ACK message is modulated ACK message, or wherein the sequence for the NACK message is modulated NACK message.
8. A wireless communication method, comprising:
   determining, by a communication node, that a first resource for a non-acknowledgement (NACK) only transmission in a control channel overlaps in time domain with a second resource for a hybrid automatic repeat request acknowledgement (HARQ-ACK) transmission; and
   transmitting, in response to the determining, a sequence in the second resource in the control channel,
   wherein the sequence indicates a first feedback message for the HARQ-ACK transmission and a second feedback message for the NACK only transmission.
9. The method of item 8, wherein the HARQ-ACK transmission is a one-bit HARQ-ACK transmission based on a first transmission format.
10. The method of item 8, wherein the HARQ-ACK transmission is a two-bit HARQ-ACK transmission based on a second transmission format.
11. The method of item 8, wherein the sequence is determined based on a sequence cyclic shift value that is determined based on the first feedback message.
12. The method of item 11, wherein the sequence cyclic shift value is based on a first one-bit value associated with the HARQ-ACK transmission and a second one-bit value associated with the NACK only transmission.
13. The method of item 12, wherein the second one-bit value is obtained by converting the second feedback message for the NACK only transmission to the second one-bit value.
14. The method of any of items 8 to 13,
   wherein the first feedback message includes either an acknowledgement (ACK) message or a NACK message, and
   wherein the second feedback message includes either the ACK message or the NACK message.
15. The method of item 14, wherein the sequence for the ACK message is modulated ACK message, or wherein the sequence for the NACK message is modulated NACK message.
16. The method of any of items 1 to 15, wherein the control channel includes a physical uplink control channel (PUCCH).
17. A wireless communication method, comprising:
   determining, by a communication node, that a first resource for a first non-acknowledgement (NACK) only transmission in a first control channel overlaps in time domain with a second resource for a second NACK only transmission in a second control channel; and
   transmitting, in response to the determining and in a third resource in a third control channel from at least two additional control channels, one or more bits that indicate a feedback message for both the first NACK only transmission and the second NACK only transmission,
   wherein the third control channel is selected based on a size of the one or more bits, and
   wherein the one or more bits are obtained by multiplexing a first value that indicate a first feedback message for the first NACK only transmission with a second value that indicates a second feedback message for the second NACK only transmission.
18. The method of item 17, wherein the third resource of the third control channel is associated with one or two transmission bits.
19. The method of item 17, wherein the third resource of the third control channel is associated with more than two transmission bits.
20. The method of item 17, wherein the one or more bits are obtained by:
   converting each of the first value and the second value to one-bit value; and
   concatenating each of the one-bit value to obtain the one or more bits.
21. The method of item 17, further comprising:
   determining that a transmission using the third resource in the third control channel for the feedback message is not to be performed in response to the first feedback message and the second feedback message comprising an acknowledgement (ACK) message for both the first NACK only transmission and the second NACK only transmission.
22. The method of item 17, wherein the transmitting the one or more bits that indicate the feedback message is performed in response to any one of the first feedback message and the second feedback message comprising a non-acknowledgment (NACK) message.
23. The method of item 17,
   wherein each non-acknowledgement (NACK) message in any one or more of the first feedback message and the second feedback message are converted to the first value and the second value, respectively, and
   wherein each of the first value and the second value comprise one-bit.
24. The method of item 17, further comprising:
   transmitting, in the third control channel, an aperiodic-channel state information (A-CSI) report that is triggered by a downlink grant information that schedules a physical downlink shared channel or by a non-acknowledgement (NACK) of the physical downlink shared channel.
25. The method of any of items 17 to 24,
   wherein the first control channel includes a first physical uplink control channel (PUCCH),
   wherein the second control channel includes a second PUCCH,
   wherein the third control channel includes a third PUCCH, and
   wherein the at least two additional control channels includes at least two additional PUCCHs configured to transmit the one or more bits.
26. A wireless communication method, comprising:
   receiving, by a network node and in a resource in a control channel, one or more bits that indicate a feedback message for both a first non-acknowledgement (NACK) only transmission and a second NACK only transmission,
   wherein the resource is based on a size of the one or more bits, and
   wherein the one or more bits are a result of a multiplexing operation between a first value that indicate a first feedback message for the first NACK only transmission and a second value that indicates a second feedback message for the second NACK only transmission.
27. The method of item 26, wherein the resource of the control channel is associated with one or two transmission bits.
28. The method of item 26, wherein the resource of the control channel is associated with more than two transmission bits.
29. The method of item 26, further comprising:
   receiving, in the control channel, an aperiodic-channel state information (A-CSI) report that is triggered by transmission of a downlink grant information that schedules a physical downlink shared channel or by a non-acknowledgement (NACK) of the physical downlink shared channel.
30. The method of any of items 26 to 29, wherein the control channel includes a physical uplink control channel (PUCCH).
31. A wireless communication method, comprising:
   determining, by a communication node, that two first resources for two non-acknowledgement (NACK) only transmissions in two first control channels overlaps in time domain with two second resources for two unicast transmissions in two second control channels,
      wherein each of the first resources is associated with one NACK only transmission in one first control channel, and
      wherein each of the second resources is associated with one unicast transmission in one second control channel;
   obtaining a multiplexed unicast transmission by multiplexing the two unicast transmissions; and
   transmitting the multiplexed unicast transmission.
32. The method of item 31, wherein the two first resources do not overlap in time domain.
33. The method of item 31, further comprising:
   obtaining, in response to the two first resources overlapping in time domain, a multiplexed NACK only transmission by multiplexing the two NACK only transmissions.
34. The method of item 31, wherein the two unicast transmissions include a unicast hybrid automatic repeat request acknowledgement (HARQ-ACK) transmission and a persistent or semi-persistent channel state information (CSI) transmission.
35. The method of any of items 31 to 34,
   wherein the two first control channels include two first physical uplink control channels (PUCCHs), and
   wherein the two second control channels includes two second PUCCHs.
36. An apparatus for wireless communication comprising a processor, configured to implement a method recited in one or more of items 1 to 35.
37. A non-transitory computer readable program storage medium having code stored thereon, the code, when executed by a processor, causing the processor to implement a method recited in one or more of items 1 to 35.

## Claims

1. A wireless communication method, comprising:
determining, by a communication node, that multiple control channels overlap in time domain, wherein each of the multiple control channel corresponds to a non-acknowledgement, NACK, only transmission;
converting, in response to the determining and by the communication node, each NACK only transmission to 1-bit HARQ-ACK information, wherein a value of the 1-bit HARQ-ACK information is 0 or 1; and
transmitting, in response to the determining and in a third resource in a third control channel from at least two additional control channels, a plurality of bits that indicate a feedback message for each NACK only transmission corresponding to each of the multiple control channels,
wherein the third control channel is selected from the at least two additional control channels based on a size of plurality of bits, and
wherein the plurality of bits are obtained by multiplexing the HARQ-ACK information converted from the each NACK only transmission.

2. A wireless communication method, comprising:
determining, by a network node, that multiple control channels overlap in time domain, wherein each of the multiple control channel corresponds to a non-acknowledgement, NACK, only transmission;
confirming, in response to the determining and by the network node, each NACK only transmission is converted to 1-bit HARQ-ACK information, wherein a value of the 1-bit HARQ-ACK information is 0 or 1; and
receiving, in a third resource in a third control channel and in response to the determining that the multiple control channels overlap in time domain, and in response to the confirming, a plurality of bits that indicate a feedback message for each NACK only transmission corresponding to each of the multiple control channels,
wherein the third control channel is selected from at least two additional control channels based on a size of plurality of bits, and
wherein the plurality of bits are obtained by multiplexing the HARQ-ACK information converted from the each NACK only transmission.

3. The method of claim 1 or 2, wherein the third resource for the third control channel is associated with one or two bits.

4. The method of claim 1 or 2, wherein the third resource for the third control channel is associated with more than two bits.

5. The method of claim 1 or 2, further comprising:
determining that a transmission using the third resource in the third control channel for the feedback message is to be performed in response to the plurality of bits comprising an acknowledgement (ACK) message for the each NACK only transmission.

6. The method of claim 1 or 2, wherein the transmitting the plurality of bits is performed in response to any one of the plurality bits comprising a non-acknowledgment (NACK) message.

7. The method of claim 1 or 2, further comprising:
transmitting, in the third control channel, an aperiodic-channel state information (A-CSI) report that is triggered by a downlink grant information that schedules a physical downlink shared channel or by a non-acknowledgement (NACK) of the physical downlink shared channel.

8. The method of claim 1 or 2,
wherein the multiple control channels include a physical uplink control channel (PUCCH),
wherein the third control channel includes a third PUCCH, and
wherein the at least two additional control channels includes at least two additional PUCCHs.

9. A communication node for wireless communication comprising a processor, configured to implement a method of any of claims 1 to 8.
